Europäisches Patentamt

European Patent Office

Office européen des brevets

(19)

(11) Publication number: **0 127 269**
**B1**

(12) **EUROPEAN PATENT SPECIFICATION**

(45) Date of publication of patent specification: 01.06.88

(51) Int. Cl.⁴: **G 01 V 5/10**

(21) Application number: **84301528.0**

(22) Date of filing: **08.03.84**

(54) Epithermal neutron detector and logging method using it.

(30) Priority: **22.04.83 US 487541**

(43) Date of publication of application:
**05.12.84 Bulletin 84/49**

(45) Publication of the grant of the patent:
**01.06.88 Bulletin 88/22**

(84) Designated Contracting States:
**DE FR GB NL**

(56) References cited:
**US-A-2 920 204**
**US-A-4 097 737**
**US-A-4 283 624**

(73) Proprietor: **MOBIL OIL CORPORATION**
**150 East 42nd Street**
**New York New York 10017 (US)**

(72) Inventor: **Allen, Linus Scott**
**10260 Newcombe**
**Dallas Texas 75228 (US)**
Inventor: **Mills, William Raymond, Jr.**
**919 Clint Smith Drive**
**Duncanville Texas 75137 (US)**

(74) Representative: **Colgan, Stephen James et al**
**CARPMAELS & RANSFORD**
**43 Bloomsbury Square**
**London WC1A 2RA. (GB)**

Courier Press, Leamington Spa, England.

## Description

This invention relates to radioactive well logging and more particularly to a well logging system for irradiating subterranean formations under investigation with bursts of fast neutrons and characterizing the formation on the basis of the decay of the epithermal neutron population produced.

Various neutron logging techniques may be employed in order to characterize subterranean formations with regard to their fluid or mineral content, lithologic characteristics or porosity, or to provide for stratigraphic correlation. The neutron source may be steady-state source or a pulsed source. For example, neutron porosity logging may be carried out using a steady-state neutron source in order to bombard the formation with fast neutrons; the porosity of the formation may be determined by measuring thermal neutrons employing two detectors at different spacings from the source or by measuring epithermal neutrons with a single detector.

Inpulsed neutron logging precedures, the formations are irradiated with repetitive bursts of fast neutrons, normally neutrons exhibiting an energy greater than 1 Mev. When the fast neutrons enter the formation, they are moderated, or slowed down, by nuclei within the formation to form lower energy neutron populations. The fast neutrons are moderated to lower energy levels by the nuclear collision processes of elastic and inelastic scattering. In elastic scattering the neutron loses a portion of its energy in a collision that is perfectly elastic, i.e., the energy lost by the neutron is acquired as kinetic energy by the nucleus with which it collides. In inelastic scattering only some of the energy lost by the neutron is acquired as kinetic energy by the nucleus with which it collides. The remaining energy loss generally takes the form of a gamma ray emitted from the collision nucleus.

In the course of moderation, the neutrons reach the epithermal range and thence are further moderated until they reach the thermal range. Thermal neutrons are neutrons which are in thermal equilibrium with their environment. The distribution in speed of thermal neutrons follows the so-called Maswellian distribution law. The energy corresponding to the most probable speed for a temperature of 20°C is 0.025 electron volt. Epithermal neutrons are those neutrons which exhibit energies within the range from immediately above the thermal neutron region to about 100 electron volts. While the boundary between thermal and epithermal neutrons is, of necessity, somewhat arbitrary, it is normally placed in the range of 0.1—1 electron volt.

The populations of neutrons at the various energy levels decay with time following primary irradiation and thus offer means of characterizing the formation. For example, in the case of elastic scattering, which predominates for energies between a few Mev and about 1 Mev, the number of collisions required for a neutron to moderate from one energy level to a second lower energy level varies more or less directly with the atomic weight of the nuclei available for collision. In subterranean formations, collisions with hydrogen nulcei present in hydrogenous materials such as oil, water and gas tend to predominate in the slowing down process. Thus, the rate of decay of the epithermal neutron population gives a qualitative indication of the amount of hydrogenous material present which in turn may be indicative of the porosity of the formation.

For example, U.S. Patent US—A—4,097,737 describes a method and system for epithermal neutron die-away logging utilizing a 14 Mev pulsed neutron source and a neutron detector that is sensitive to epithermal neutrons and highly discriminatory against thermal neutrons. The detector is relatively insensitive to the high energy neutrons and has a filter that renders it sharply insensitive to thermal neutrons. The filter is a compound filter having a layer of cadmium about 0.20mm (8 mils) thick and a layer of gadolinium about 0.25mm (10 mils) thick.

US—A—4283624 also refers to this construction, while US—A—2920204 refers to the use of gadolinium without specifying filter thickness values.

In accordance with the present invention, there is provided an epithermal neutron detector, comprising:

(a) a neutron-sensitive counter, and

(b) a neutron filter consisting of a layer of gadolinium encasing the counter, characterised in that the filter has a thickness of 0.15mm.

The invention also provides a system for epithermal neutron die-away logging of subterranean formations surrounding a borehole comprising:

(a) a source of fast neutrons for irradiating the formations surrounding the borehole, and

(b) an epithermal neutron counter as specified in the preceding paragraph.

In use of the invention as defined above, a source of fast neutrons irradiates the formations surrounding the borehole. A neutron counter detects primarily epithermal neutrons returning to the borehole from the irradiated formations. The neutron filter which surrounds the neutron counter has an optimum filter thickness so as to permit the longest possible delay time following each burst of fast neutrons from the neutron source before the epithermal neutrons from the irradiated formations are detected by the neutron counter, while at the same time optimizing the epithermal neutron counting rates with minimal thermal neutron effects.

The invention is described below in greater detail by way of example only with reference to the accompanying drawings, in which

Fig. 1 illustrates the neutron detector of the invention;

Fig. 2 illustrates counting rate curves for various neutron filter thicknesses;

Figs. 3 and 7 illustrate counting rate delay time curves for use in determining optimum neutron filter thickness; and

Figs. 4—6 illustrate auxiliary curves derived from counting rate curves and used in determining optimum neutron filter thickness.

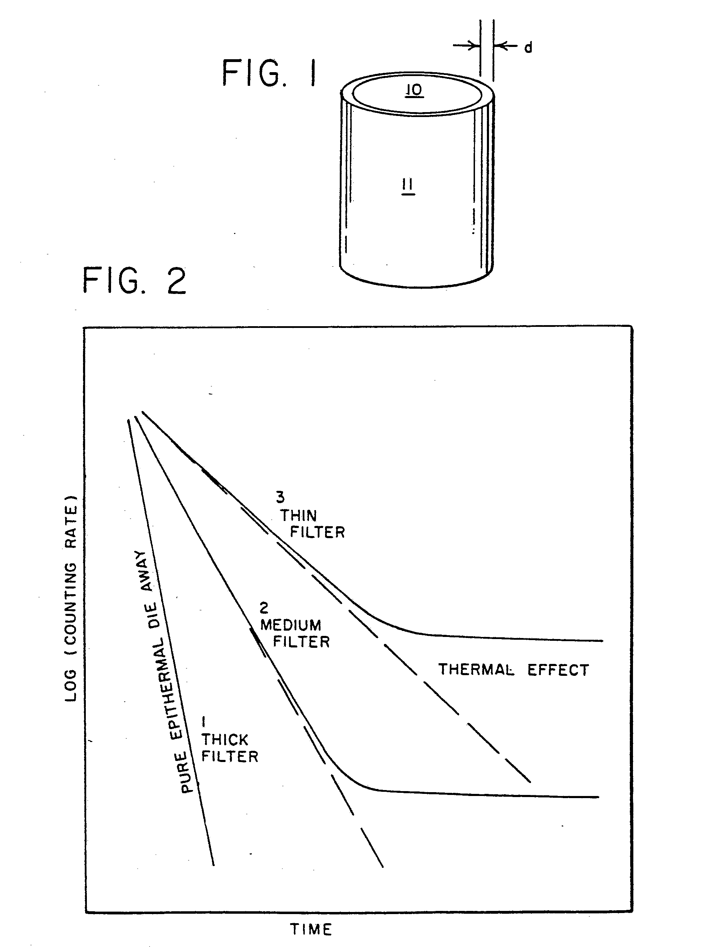

Referring to Fig. 1 of the drawings, an epithermal neutron detector includes a neutron-sensitive counter 10, preferably a proportional counter filled with helium-3 gas, surrounded by a neutron filter 11, consisting of a thin layer of gadolinium. Such a detector can be employed in a system such as that described in U.S. Patent 4,097,737 for epithermal die-away porosity logging.

The neutron filter 11 surrounding the neutron counter 10 is of optimum thickness to permit the longest possible delay time following each neutron burst before the epithermal neutrons are detected by the neutron counter 10, while at the same time maintaining (i) thermal neutron effects within an acceptable level and (ii) acceptable epithermal neutron counting rates. This can be explained by referring to Fig. 2 which shows die-away curves obtained for a range of neutron filter thicknesses surrounding a given neutron counter when the formation being logged has a given porosity. In Fig. 2, the solid curves show the total observed response, which is the sum of the desired epithermal neutron response and the unwanted thermal neutron response. The broken curves show only an epithermal response. Curve 1 is obtained with a thick filter surrounding the neutron counter, curve 2 is obtained with a medium filter, and curve 3 is obtained with a thin filter.

Of course, the terms thick, medium and thin are relative to one another and are material dependent. The important criterion is that if the filter material is thick enough to produce a pure epithermal neutron decay, unwanted thermal neutrons are eliminated from the measurement and the curve 1 results. However, in this event the measurement time is undesirably short, making an accurate epithermal die-away measurement difficult to achieve. By utilizing a thinner filter, the measurement is spread over a longer time period. However, if the filter is too thin, the unwanted contribution of thermal neutrons becomes too large and the desired epithermal die-away measurement is not achieved, as shown in curve 3. The invention provides for an optimum compromise between the two conditions shown in curves 1 and 3 so as to provide as nearly a pure epithermal die-away over as long a time period as is possible before the thermal neutron contribution becomes objectionably large. Such a compromise is shown in curve 2.

In the design of such an optimum filter thickness, two conditions need to be considered:

$$[\tau(t)-\tau_{epi}(t)]/\tau_{epi}(t)\leq_\eta \qquad (1)$$

and

$$\text{Counting rate (t)/Counting rate (0)} \geq \rho \qquad (2)$$

where

$\tau(t)$=observed neutron lifetime at time delay t,

$\tau_{epi}(t)$=epithermal neutron lifetime at time delay t,

Counting rate (t)=counting rate at time delay t,

Counting rate (0)=counting rate at zero time delay,

$\eta$=a dimensionless parameter chosen to permit a given admixture of thermal neutron response, and

$\pi$=a dimensionless parameter chosen to permit a given relative statistical precision.

The physical significance of the parameter $\eta$ may be explained as follows. The observed neutron lifetime $\tau$ is a function of both epithermal and thermal neutron properties of earth formations. It is desired to maintain the dependence of $\tau$ on thermal neutron effects as low as is practical. The parameter $\eta$ is a quantitative measure of the degree to which thermal neutron effects will influence the observed neutron lifetime. For thick filters, $\tau\approx\tau_{epi}$ and $\eta$ will be very small. For thin filters, $\tau>\tau_{epi}$ and $\eta$ will be relatively large. In determining the optimum filter thickness, a value of $\eta$ is chosen that will be acceptable for the purpose of the measurement being made. In some cases a relatively large value of $\eta$ will be acceptable; in other cases a small value will be necessary.

The physical significance of the parameter $\rho$ is based on the fact that counting rates in at least two distinct time intervals must be measured in order to determine a lifetime $\tau$. Assuming the time intervals to be equal, the statistical precision within which $\tau$ can be determined depends primarily on the counting rate in the time interval that occurs latest in time following the burst from the neutron source. If t is the delay time corresponding to the beginning of the latest interval, then the ratio:

$$\text{Counting rate (t)/Counting rate (0)}$$

may be taken as a measure of the statistical precision of $\tau$. The above ratio is a function of t and depends on the detector/filter combination; its primary dependence is on filter characteristics. As with the parameter $\eta$, an operational value for $\rho$ is chosen based on observed die-away curves and on a knowledge of how "far down" a decay curve measurements can be made that are statistically useful.

The equality conditions of equations (1) and (2) are satisfied for given values of $\eta$ and $\rho$ at counting rate delay times $t_\eta$ and $t_\rho$. Filter thickness optimization can then be expressed as follows: for a given filter type, that filter thickness is chosen which maximizes the smaller of the delay times $t_\eta$ and $t_\rho$. This optimization criterion may be expressed mathematically as:

$$\text{Maximize } t_{min}\equiv Sm(t\eta, t\rho) \qquad (3)$$

where

$t_{min}$ is the smaller of $t_\eta$ and $t_\rho$.

The values of $t_\eta$ and $t_\rho$ will depend primarily on the filter type and thickness, $X_f$, and the values chosen for $\eta$ and $\rho$. Thus, for a given filter type

$$t_\eta = f(X_f, \eta) \qquad (4)$$

$$t_\rho = g(X_f, \rho) \qquad (5)$$

where f and g represent functional dependence.

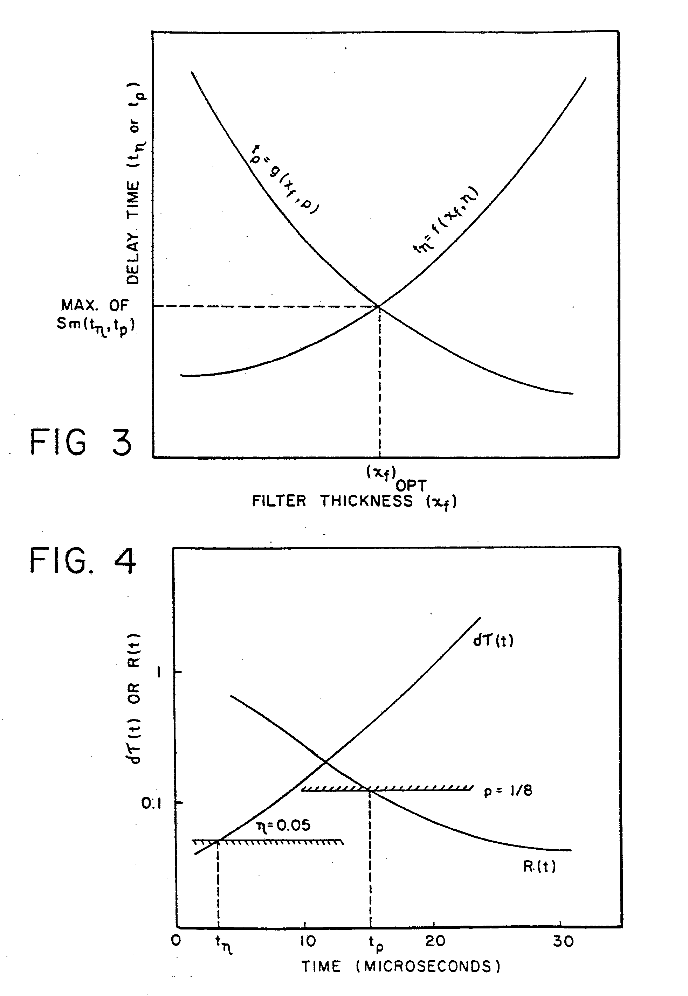

For given values of $\eta$ and $\rho$, Fig. 3 shows the qualitative behavior of $t_\eta$ and $t_\rho$ as a function of $X_f$. The maximum of $Sm(t_\eta, t_\rho)$ occurs when $t_\eta$ equals $t_\rho$ and this condition results in a unique optimum value of filter thickness $(X_f)_{OPT}$.

An example of this method for determining an optimum filter thickness can be illustrated for a helium-3 detector that is 6.35 mm in diameter, 25.4 mm in length and filled with helium-3 gas to a pressure of 10 bar. The type of filter material is gadolinium. Calculations can be made to determine the time-dependent epithermal and total (epithermal plus thermal) relative counting rates for a range of gadolinium thickness $X_f$. Die-away plots such as those of Fig. 2 can be obtained for each value of $X_f$. From these plots, values of

$$\varepsilon\tau(t) = [\tau(t) - \tau_{epi}(t)]/\tau_{epi}(t) \qquad (6)$$

and

$$R(t) = \text{Counting rate (t)/Counting rate (0)} \qquad (7)$$

can be determined and plotted as a function of time, t. Note that $\delta\tau(t)$ and $R(t)$ are functions of t, in contrast to $\eta$ and $\rho$ which are parameters whose values are selected. Thus, for each value of $X_f$ a pair of curves $\delta\tau$ and $R$ is obtained. For selected values of $\eta$ and $\rho$ the plots of $\delta\tau$ and $R$ are used to determine $t_\eta$ and $t_\rho$ that satisfy the conditions:

$$\delta\tau_\eta(t) \le \eta \qquad (8)$$

and

$$R(t_\rho) \ge \rho. \qquad (9)$$

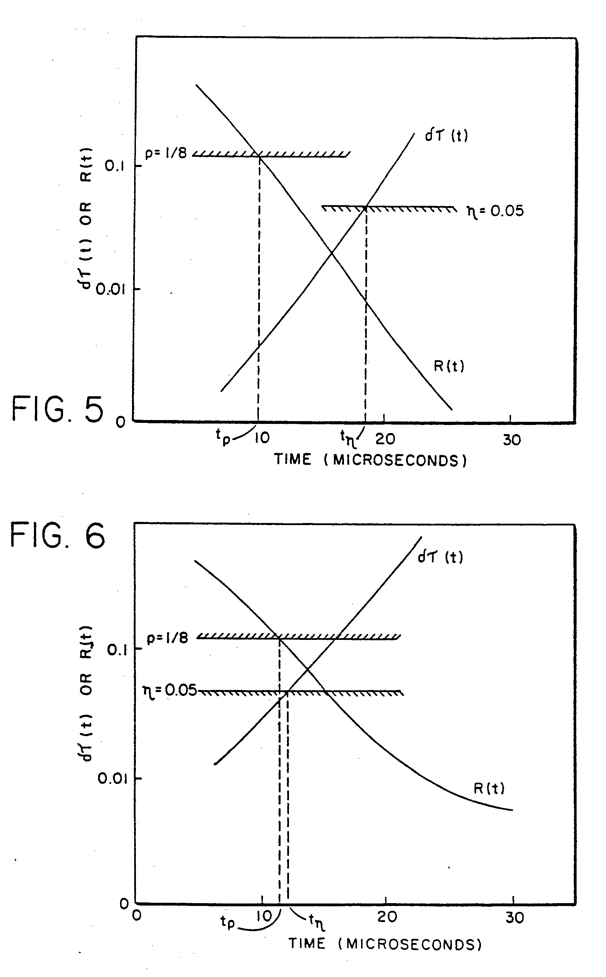

Plots of $\delta\tau(t)$ and $R(t)$ are shown in Figs. 4—6 for a typical case of a high-porosity sandstone formation. Fig. 4 is for a gadolinium thickness that is considerably thinner than optimum, Fig. 5 is for gadolinium that is considerably thicker than optimum, and Fig. 6 is for gadolinium of near optimum thickness. In this example, $\eta = 0.05$ and $\rho = 0.125$. The values $t_\eta$ and $t_\rho$ that are implied by equations (8) and (9) are indicated in the drawings.

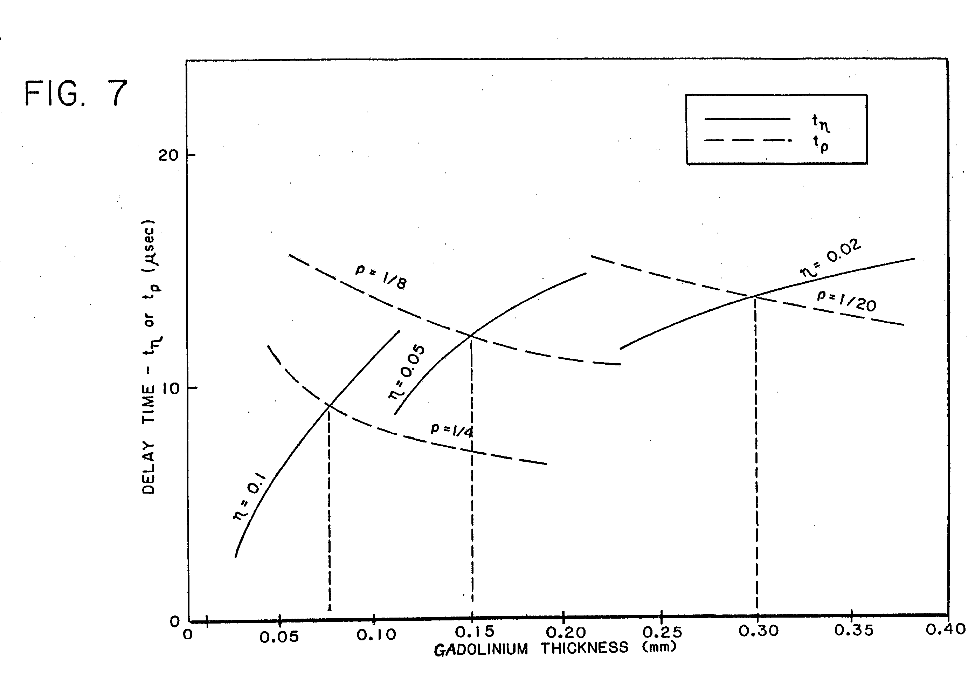

Fig. 7 shows plots of $t_\eta$ (solid line) and $t_\eta$ (broken line) as a function of gadolinium thickness for three sets of values of $\eta$ and $\rho$:.

| Set no. | $\eta$ | $\rho$ | $(X_f)_{OPT,}$ (mm) |
|---------|--------|--------|---------------------|
| 1 | 0.10 | 0.25 | 0.075 |
| 2 | 0.05 | 0.125 | 0.15 |
| 3 | 0.02 | 0.05 | 0.3 |

The values obtained for the optimum gadolinium thickness in each set are given above. Sets 1 and 3 are considered to be the extreme values of $\eta$ and $\rho$ for satisfactory epithermal die-away measurements. Set 2 is considered to be the best compromise for $\eta$ and $\rho$. Thus, for gadolinium, the optimum filter thickness, as in accordance with the invention, is 0.15 mm.

**Claims**

1. An epithermal neutron detector, comprising:
(a) a neutron-sensitive counter (10), and
(b) a neutron filter (11) consisting of a layer of gadolinium encasing the counter, characterised in that the filter has a thickness of 0.15 mm.

2. A system for epithermal neutron die-away logging of subterranean formations surrounding a borehole, comprising:
(a) a source of fast neutrons for irradiating the formations surrounding the borehole, and
(b) an epithermal neutron detector as claimed in claim 1.

3. A method of measuring the epithermal neutron die-away characteristics of a subsurface formation surrounding a borehole, comprising the steps of:
(a) irradiating the subsurface formation surrounding the borehole with bursts of fast neutrons, and
(b) filtering the neutron radiation returning to the borehole and counting the epithermal neutrons in that radiation using an epithermal neutron detector as claimed in claim 1.

**Patentansprüche**

1. Detektor für epithermische Neutronen, aufweisend:
(a) einen auf Neutronen ansprechenden Zähler (10), und
(b) ein Neutronenfilter (11), welches aus einer Schicht aus Gadolinium besteht und den Zähler umgibt, dadurch gekennzeichnet, daß das Filter eine Dicke Von 0,15 mm hat.

2. System zur Aufzeichnung des Abklingverhaltens epithermischer Neutronen von unterirdischen Formationen, die ein Bohrloch umgeben, aufweisend:
(a) eine Quelle schneller Neutronen zur Bestrahlung der das Bohrloch umgebenden Formationen, und
(b) einen Detektor für epithermische Neutronen nach Anspruch 1.

3. Verfahren zur Messung der Abklingcharakteristik epithermischer Neutronen einer unterirdischen ein Bohrlock umgebenden Formation, aufweisend die Stufen:

(a) Bestrahlen der unterirdischen das Bohrloch umgebenden Formation mit Stößen schneller Neutronen, und

(b) Filtern der vom Bohrlock rückkehrenden Neutronenstrahlung und Zählen der epithermischen Neutronen in dieser Strahlung unter Verwendung eines Detektors für epithermische Neutronen nach Anspruch 1.

**Revendications**

1. Détecteur de neutrons épithermiques, comprenant:

(a) un compteur (10) sensible aux neutrons, et

(b) un filtre (11) de neutrons constitué par une couche de gadolinium recouvrant le compteur, charactérisé en ce que le filtre possède une épaisseur de 0,15 mm.

2. Système destiné à obtenir une diagraphie par extinction de neutrons épithermiques pour des formations souterraines entourant un trou de sonde, comprenant:

(a) une source de neutrons rapides servant à irradier les formations entourant le trou de sonde, et

(b) un détecteur de neutrons épithermiques tel que défini dans la revendication 1.

3. Procédé de mesure des caractéristiques d'extinction de neutrons épithermiques pour une formation souterraine entourant un trou de sonde comprenant les opérations suivantes:

(a) irradier la formation souterraine qui entoure le trou de sonde au moyen de germes de neutrons rapides, et

(b) filtrer le rayonnement de neutrons retournant au trou de sonde et compter les neutrons épithermiques contenus dans ce rayonnement en utilisant un dètecteur de neutrons épithermiques tel que défini dans la revendication 1.

FIG. 1

FIG. 2

0 127 269

FIG 3

MAX. OF $Sm(t_\eta, t_p)$

$t_p = g(x_f, \rho)$

$t_\eta = f(x_f, \eta)$

DELAY TIME $(t_\eta$ or $t_p)$

$(x_f)_{OPT}$

FILTER THICKNESS $(x_f)$

FIG. 4

$dT(t)$

$\rho = 1/8$

$\eta = 0.05$

$R(t)$

$dT(t)$ OR $R(t)$

$t_\eta$     $t_p$

TIME (MICROSECONDS)

2

FIG. 5

FIG. 6

3

FIG. 7